# EUROPÄISCHE PATENTSCHRIFT

(11) **EP 3 130 100 B1**
(45) Veröffentlichungstag und Bekanntmachung des Hinweises auf die Patenterteilung: **20.10.2021**
(21) Anmeldenummer: 15718810.3
(22) Anmeldetag: 09.04.2015
(51) Int. Cl.: H04L 1/20, H04L 1/08, H04L 1/22, H04L 1/00

(54) **VERFAHREN FÜR EIN REDUNDANTES ÜBERTRAGUNGSSYSTEM MIT PRP UND FEHLVORHERSAGE**
METHOD FOR A REDUNDANT TRANSMISSION SYSTEM WITH PRP AND FAULT PREDICTION
PROCÉDÉ POUR UN SYSTÈME DE TRANSMISSION REDONDANT AVEC RP ET PRÉDICTION D'ERREUR

(30) Priorität: 09.04.2014 DE 102014206873
(43) Veröffentlichungstag der Anmeldung: 15.02.2017
(73) Patentinhaber: Hirschmann Automation and Control GmbH, 72654 Neckartenzlingen (DE)
(72) Erfinder: HEER, Tobias, 72636 Frickenhausen (DE)
(74) Vertreter: Greif, Thomas
(86) Internationale Anmeldenummer: PCT/EP2015/057786
(87) Internationale Veröffentlichungsnummer: WO 2015/155315

(56) Entgegenhaltungen:
- WO-A1-2011/160957
- US-A1- 2010 110 904
- None

## Beschreibung

Die Erfindung betrifft ein Verfahren zum Betreiben eines Übertragungssystems, das ein erstes Netzwerk und zumindest ein weiteres Netzwerk aufweist, wobei zwischen diesen zumindest zwei Netzwerken dadurch Daten ausgetauscht werden, dass Daten des ersten Netzwerkes Verdopplungsmitteln zugeführt werden, wobei die zugeführten Daten über zumindest zwei Übertragungsstrecken drahtlos mittels PRP zu Separiermitteln übertragen und von den Separiermitteln an das angeschlossene weitere Netzwerk weitergeleitet werden, gemäß den Merkmalen des Patentanspruches 1. Bestehende Übertragungssysteme wurden in WO2011/160957 am 29.12.2011 und in US2010/110904 am 06.05.2010 offenbart.

Solche bekannten Übertragungssysteme finden Anwendung in sicherheitskritischen Fällen bei verfahrenstechnischen Anlagen, stationären oder mobilen Arbeitseinrichtungen, beispielsweise bei Arbeitsfahrzeugen wie Krane oder dergleichen.

Es ist dabei wichtig, dass Daten zuverlässig von dem ersten Netzwerk zu dem zumindest weiteren Netzwerk übertragen werden. Eine solche sicherheitskritische Datenübertragung ist besonders dann wichtig, wenn die Daten über eine drahtlose Übertragungsstrecke übertragen werden. Hierzu hat es schon eine Verbesserung derart gegeben, dass nicht nur eine Übertragungsstrecke, sondern zumindest zwei, vorzugsweise genau zwei Übertragungsstrecken für diese Sicherheitsanwendung (auch Safety-Anwendung genannt) eingesetzt werden. Eine weitere Verbesserung dieser redundanten Datenübertragung hat dadurch stattgefunden, dass sie drahtlos, das heißt über Funk oder Licht, mittels des PRP (Parallel Redundancy Protocol), welches ein Layer-2-Redundanzverfahren ist, welches von höheren Schichten unabhängig ist und sich vor allen Dingen für Echtzeit-Ethernet-Mechanismen eignet, eingesetzt wird.

Unter Sicherheitsaspekten arbeitet ein solches Übertragungssystem zwar schon zufriedenstellend, weil Redundanz der beiden Übertragungsstrecken gegeben ist. So kann beispielsweise dann, wenn eine drahtlose Übertragungsstrecke gestört ist oder ausfällt, die zumindest zweite Übertragungsstrecke genutzt werden, um die Datenübertragung von dem ersten zu dem weiteren Netzwerk sicherzustellen.

Dabei ist jedoch nicht auszuschließen, dass trotz dieser Redundanz die Datenübertragung zwischen den beiden Netzwerken unter sicherheitskritischen Aspekten in unzulässiger Weise gestört wird.

Obwohl bei solchen Übertragungssystemen mit zumindest zwei Übertragungsstrecken die Redundanz deutlich erhöht ist und sicherheitskritische Aspekte berücksichtigt wurden, besteht trotzdem die Gefahr, dass ein solches Übertragungssystem nicht absolut fehlerfrei arbeitet. Aufgrund des Redundanzmechanismus, der mittels der drahtlosen Datenübertragung mit Hilfe von PRP über zwei voneinander unabhängige Übertragungsstrecken realisiert wird, besteht aufgrund der Fehlerkompensation mittels PRP die Gefahr, dass ein scheinbar fehlerfrei arbeitendes Übertragungssystem vorliegt, was jedoch in der Tat nicht der Fall ist, weil der Redundanzmechanismus interne Systemfehler erfassen und kompensieren kann. So sind beispielsweise einzelne auf der Übertragungsstrecke verloren gegangene Datenpakete für den Betreiber des Übertragungssystems nicht erkennbar. So kann zwar aufgrund des Redundanzmechanismus der Eindruck entstehen, dass das Übertragungssystem fehlerfrei arbeitet, was jedoch nicht der Fall ist, da eigenständig von dem Übertragungssystem Fehler kompensiert werden. So kann beispielsweise für den Fall, dass eine der zumindest zwei Übertragungsstrecken dauerhaft gestört oder vollständig ausgefallen ist, die Datenübertragung noch über die weitere zur Verfügung stehende Übertragungsstrecke erfolgen, woraus ein scheinbar fehlerfrei arbeitendes Übertragungssystem resultiert. Allerdings besteht dann die Gefahr, dass im Falle einer Störung oder eines Ausfalles der einzigen noch zur Verfügung stehenden Übertragungsstrecke die zuverlässige Datenübertragung nicht mehr gewährleistet werden kann und es infolge dessen zu sicherheitskritischen Situationen kommen kann, die unbedingt aufgrund der Redundanz eigentlich zu vermeiden sind. In einem solchen Fall würde der Redundanzmechanismus permanent aktiv sein und die Daten nur über die einzige noch zur Verfügung stehende Übertragungsstrecke übertragen, wohingegen die zumindest weitere Übertragungsstrecke nicht mehr zur Verfügung steht, was jedoch einem Benutzer des Übertragungssystems nicht oder nicht ohne weiteres erkennbar ist. Daraus folgt, dass keine Redundanzreserve mehr zur Verfügung steht, weil der eigentliche Redundanzmechanismus, nämlich die voneinander separate Übertragung von Daten von dem einen zu dem anderen Netzwerk, dauerhaft gestört ist.

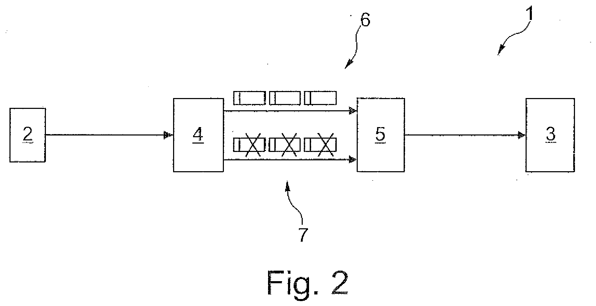

Ein solcher Fall ist in Figur 2 dargestellt. Daraus ist erkennbar, dass Daten über die eine Übertragungsstrecke dauerhaft und fehlerfrei übertragen werden, wohingegen die gleichen Daten, die über die weitere Übertragungsstrecke übertragen werden, zu 100 % verloren gehen, weil zum Beispiel diese Übertragungsstrecke vollständig ausgefallen ist. Die 100 % fehlerfrei über die eine Übertragungsstrecke übertragenen Daten kommen bei dem weiteren Netzwerk fehlerfrei an, sodass die Datenübertragung zwar aufrecht erhalten und der Betrieb des Übertragungssystems fehlerfrei gewährleistet ist. Kommt es jedoch zu einer Störung der Übertragungsstrecke, mit der bisher 100 % der Daten übertragen worden sind, wir der Redundanzmechanismus beeinträchtigt oder im schlimmsten Falle sogar vollständig aufgehoben, sodass es in nachteiliger Weise zu kritischen Situationen kommen kann.

Der Erfindung liegt daher die Aufgabe zugrunde, ein Verfahren zum Betreiben eines Übertragungssystems hinsichtlich seiner Sicherheitsreserven zu verbessern.

Diese Aufgabe ist durch die Merkmale des Patentanspruches 1 gelöst.

Erfindungsgemäß ist vorgesehen, dass die Daten als Datenpakete übertragen werden und ermittelt wird, ob ein Datenpaket übertragen wurde oder nicht und darauf basierend abgeleitet wird, ob das Übertragungssystem fehlerfrei oder nicht arbeitet. Mit der Lösung der Erfindung kann also festgestellt werden, ob der Redundanzmechanismus arbeitet oder nicht und aufgrund dessen kann eine Aussage abgeleitet werden, ob das Übertragungssystem fehlerfrei oder fehlerbehaftet, das heißt unter Anwendung des Redundanzmechanismus arbeitet. Damit wird für den Anwender die Möglichkeit geschaffen, das Übertragungssystem zu überwachen und möglicherweise Gegenmaßnahmen einzuleiten. Wenn also beispielsweise festgestellt wird, dass alle Datenpakete sowohl über die eine als auch über die weitere Übertragungsstrecke fehlerfrei übertragen worden sind, kann daraus abgeleitet werden, dass das gesamte Übertragungssystem fehlerfrei arbeitet und die erforderliche und gewünschte Redundanzreserve uneingeschränkt zur Verfügung steht. Wird jedoch festgestellt, dass ein Teil der Daten über die eine Übertragungsstrecke und/oder ein Teil der Daten über die weitere Übertragungsstrecke nicht fehlerfrei übertragen wurden (weil zum Beispiel eine der Übertragungsstrecken gestört war oder in Komponenten des Übertragungssystems ein Fehler vorliegt), kann daraus abgeleitet werden, dass das Übertragungssystem zwar nach wie vor Daten von dem einen zu dem anderen Netzwerk übertragen werden kann, das jedoch die Redundanzreserve eingeschränkt ist. Je nachdem, wie groß das Maß der als fehlerhaft oder gar nicht übertragenen Datenpakete festgestellt wurde, kann abgeleitet werden, ob dies noch zulässig ist und die geforderte Redundanzreserve noch nicht unterschritten ist oder ob dies schon der Fall ist, sodass es erforderlich ist, zumindest eine Fehleranalyse oder gegebenenfalls Gegenmaßnahmen einzuleiten.

In Weiterbildung der Erfindung wird jedes fehlerfrei übertragene Datenpaket gezählt und in Bezug gesetzt zu der Gesamtzahl der übertragenen Datenpakete und daraus eine Ausfallwahrscheinlichkeit berechnet. So ist den Verdopplungsmitteln (Redundancy Box) bekannt, wie groß die Anzahl der Datenpakete ist, die auf eine Übertragungsstrecke geschickt werden. Diese Anzahl kann den Separiermitteln (Redundancy Box) übermittelt werden, wobei diese Separiermittel die fehlerfrei auf dieser Übertragungsstrecke übertragenen und von ihre empfangenen Datenpakete zählt. Diese beiden Zahlen werden in Bezug gesetzt, wobei im Falle der fehlerfreien Übertragung das Bezugsverhältnis gleich 1 ist. Ist es jedoch kleiner 1, ist anzunehmen, dass Datenpakete bei der Übertragung auf der Übertragungsstrecke verloren gegangen sind infolge von Störungen, Ausfällen oder dergleichen. Dann kann entschieden werden, um welches Maß das Verhältnis kleiner 1 ist. Liegt es beispielsweise zwischen 0,9 und 1 oder zwischen 0,8 und 1, kann zwar davon ausgegangen werden, dass die Datenübertragung zwar noch funktioniert, jedoch der Redundanzmechanismus eingesetzt hat. Allerdings ist in diesem Falle die Redundanzreserve (die zum Beispiel bei einem Verhältnis von 0,9 oder 0,8 liegt) noch nicht unterschritten, sodass ein Eingreifen eines Benutzers des Übertragungssystems noch nicht erforderlich ist. Erst wenn diese Redundanzreserve von beispielsweise 0,9 oder 0,8 weiter unterschritten wird, ist ein Eingreifen des Benutzers hinsichtlich einer Fehleranalyse bzw. einer Fehlerbeseitigung nach erfolgter Fehleranalyse erforderlich, obwohl nach wie vor die zuverlässige Datenübertragung zwischen dem ersten und dem weiteren Netzwerk erfolgt. In einem solchen Fall kann trotz weiterer korrekter Datenübertragung einem Ausfall des Übertragungssystems oder einer Beeinträchtigung entgegengewirkt werden. Dies ist unter sicherheitskritischen Aspekten von besonderem Vorteil, da nach der Erfindung Fehler vorausschauend erkannt und dementsprechend gehandelt werden kann.

In Weiterbildung der Erfindung erfolgt die vorstehend beschriebene Vorgehensweise für jede Übertragungsstrecke separat voneinander. Das heißt, dass für jede Übertragungsstrecke jedes fehlerfrei übertragene Datenpaket gezählt und in Bezug gesetzt wird zu der Gesamtzahl der übertragenen Datenpakete und daraus eine Ausfallwahrscheinlichkeit bzw. die vorstehend genannte Redundanzreserve berechnet wird. In besonders vorteilhafter Weise wird diese Ausfallwahrscheinlichkeit oder die Redundanzreserve angezeigt. Hierzu sind entsprechende Mittel vorgesehen. Diese Mittel können zum Beispiel eine Art Ampel sein, die signalisiert, ob das Übertragungssystem zu 100 % fehlerfrei einschließlich aller Einheiten des Übertragungssystems arbeitet, ohne dass der Redundanzmechanismus eingesetzt hat. Mit entsprechenden Leuchtmitteln könnte dieser Zustand zum Beispiel in grüner Farbe angezeigt werden. Wird jedoch eine gewisse Ausfallwahrscheinlichkeit berechnet, sodass die Redundanzreserve nicht mehr gleich 1 sondern kleiner 1 ist, kann dies durch Leuchtmittel beispielsweise in gelber Farbe angezeigt werden. Dies erfolgt so lange, solange die Redundanzreserve zwar kleiner 1, aber oberhalb einer vorgebbaren Schwelle, die kleiner 1 und größer 0 ist, liegt. Diese Schwelle kann beispielsweise bei dem vorgezeichneten Wert 0,9 oder 0,8 oder davon abweichenden Werten liegen. Auf jeden Fall wird dem Betreiber des Übertragungssystems durch diese Farbe signalisiert, dass der Redundanzmechanismus eingesetzt hat und die Datenübertragung zwar noch fehlerfrei, jedoch hinsichtlich der Redundanz eingeschränkt erfolgt. Er kann daraus ableite, ob er eine Fehleranalyse durchführen und in Abhängigkeit dessen festgestellte Fehler beseitigen will. Festgestellte Fehler können beispielsweise Störungen der Übertragungsstrecke oder auch Hardwarefehler von Komponenten des Übertragungssystems sein. Erst wenn die Ausfallwahrscheinlichkeit eine vorgebbare Schwelle überschreitet, was gleichbedeutend ist mit dem Unterschreiten der Redundanzreserve unterhalb eines Schwellwertes kleiner 1, liegt eine deutlich Einschränkung nicht nur der Datenübertragung, sondern auch der Redundanz vor, sodass daraus sicherheitskritische Zustände entstehen können, wenn dieser Zustand beibehalten wird. Daher ist es nötig, in einem solchen Fall, der durch rote Leuchtmittel signalisiert werden kann, zu handeln, um solche sicherheitskritischen Zustände unbedingt zu vermeiden. Neben der Anzeige, dass eine gewisse Ausfallwahrscheinlichkeit vorliegt, kann auch alternativ oder ergänzen dazu daran gedacht werden, dass dann, wenn die Ausfallwahrscheinlichkeit eine vorgebbare Schwelle überschreitet bzw. die Redundanzreserve einen vorgebbaren Wert kleiner 1 unterschreitet, eine Benachrichtigung ausgelöst wird. Dies kann beispielsweise eine SMS-Nachricht oder vergleichbare Nachricht, eine E-Mail, oder dergleichen sein, die zum Beispiel ein Netzwerk-Administrator erhält.

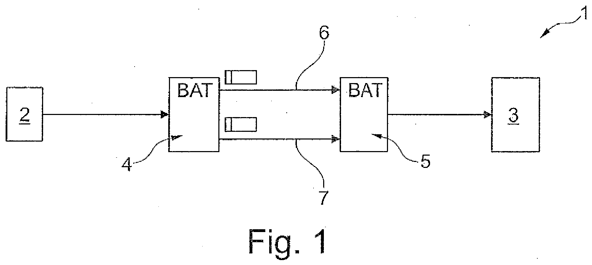

Das vorgestellte Verfahren kann auf einem Übertragungssystem, das in der Figur 1 dargestellt ist, durchgeführt werden.

Figur 1 zeigt eine prinzipielle Anordnung eines Übertragungssystems, welches zwei Netzwerke 2, 3 aufweist, die untereinander Daten austauschen sollen. Dieser Datenaustausch kann entweder unidirektional von dem Netzwerk 2 zu dem Netzwerk 3 (oder umgekehrt), genauso aber auch bidirektional zwischen den beiden Netzwerken 2, 3 erfolgen.

Bei den Netzwerken 2, 3 kann es sich um einfache oder komplexe Netzwerke, zum Beispiel in einer Ring- oder Linientopologie oder dergleichen, handeln. Es ist aber auch denkbar, dass ein solches Netzwerk 2, 3 nur ein einziges Element wie zum Beispiel einen Sensor, einen Aktor, ein Steuergerät oder dergleichen umfasst.

Um die Daten des Netzwerkes 2 zum Beispiel zu dem Netzwerk 3 zu Übertragen, sind Verdopplungsmittel 4 vorhanden. Diese Verdopplungsmittel 4 teilen den zugeführten Datenstrom in zwei Datenströme auf. Ebenso erfolgt das Zusammenführen der beiden Datenströme nach deren Empfangen über Separiermittel 5, wobei die empfangenen Datenströme nach dem Zusammenführen an das Netzwerk 3 weitergeleitet werden.

Die Übertragung der Daten zwischen den Verdopplungsmittel und den Separiermitteln 5 erfolgt über zwei gleichartige oder voneinander unterschiedliche Übertragungsstrecken 6, 7 drahtlos mittels PRP. Die Drahtlosübertragung erfolgt in vorteilhafter Weise über Funkt, wobei eine optische Übertragung auch denkbar ist. Auch denkbar ist, dass die eine Übertragungsstrecke 6 eine Funkübertragungsstrecke und die zweite Übertragungsstrecke 7 eine optische Datenübertragungsstrecke ist. Sind beide Übertragungsstrecken 6, 7 zum Beispiel Funkübertragungsstrecken, können die Daten, genauer die Datenpakete, über diese beiden Funkübertragungsstrecken zum Beispiel auf gleicher Frequenz oder unterschiedlichen Frequenzen und ansonsten gleicher Parameter oder voneinander unterschiedlicher Übertragungsparameter übertragen werden. Gleichartige Übertragungsstrecken 6, 7 sind hinsichtlich ihres Aufbaues zu bevorzugen, wobei voneinander unterschiedliche Übertragungsstrecken 6, 7 (zum Beispiel optisch/Funk bzw. voneinander unterschiedliche Übertragungsparameter) hinsichtlich der Steigerung der Redundanz zu bevorzugen sind.

Nachdem die Daten von dem Erstnetzwerk 2 den Verdopplungsmitteln 4 (bei PRP auch als Redundancy Box bezeichnet) zugeführt worden sind, wird dort veranlasst, dass jedes Datenpaket mehrfach über die gleiche Übertragungsstrecke 6, 7 übertragen wird und/oder jedem Datenpaket ein Fehlerkorrekturwert zugeordnet wird. Anschließend erfolgt in entsprechender Weise die Übertragung der Datenpakete über die Übertragungsstrecken 6, 7, wobei die von den Separiermitteln 5 (im Falle von PRP auch als Redundancy Box bezeichnet) entsprechend ausgewertet, gegebenenfalls aufbereitet und als Datenpakete dem weiteren Netzwerk 3 zugeführt werden.

Die vorstehende Beschreibung der Figur 1 bezieht sich auf eine unidirektionale Datenübertragung von dem Erstnetzwerk 2 zu dem weiteren, insbesondere dem zweiten Netzwerk 3. Hierzu sind die Verdopplungsmittel 4 zum Aufteilen des Datenstromes und die Separiermittel 5 zum Zusammenführen des empfangenen Datenstromes ausgebildet.

Ist auch eine Datenübertragung von dem Netzwerk 3 zu dem Netzwerk 2 gewünscht, können weitere Verdopplungsmittel 4 bzw. Separiermittel 5 in dem Übertragungsweg zwischen dem Netzwerk 3 und dem Netzwerk 2 vorhanden sein, sodass sich ein doppelter Aufbau ergibt. Alternativ dazu können die Mittel 4, 5 auch dazu ausgebildet sein, nicht nur den zugeführten Datenstrom zu verdoppeln, sondern auch die über die Übertragungsstrecken 6, 7 zugeführten Datenströme zu separieren, was ebenso für die Separiermittel 5 gilt.

### Bezugszeichenliste

- 1.: Übertragungssystem
- 2.: Erstes Netzwerk
- 3.: Weiteres Netzwerk
- 4.: Verdopplungsmittel
- 5.: Separiermittel
- 6.: Erste Übertragungsstrecke
- 7.: Zweite Übertragungsstrecke

## Patentansprüche

1. Verfahren zum Betreiben eines Übertragungssystemes (1), das ein erstes Netzwerk (2) und zumindest ein weiteres Netzwerk (3) aufweist, wobei zwischen diesen zumindest zwei Netzwerken (2, 3) dadurch Daten ausgetauscht werden, dass Daten des ersten Netzwerkes (2) Verdopplungsmitteln (4) zugeführt werden, wobei die zugeführten Daten durch die Verdopplungsmittel in zwei Datenströme aufgeteilt werden und über zumindest zwei Übertragungsstrecken (6, 7) drahtlos mittels Parallel Redundancy Protocol, PRP, zu Separiermitteln (5) übertragen und von den Separiermitteln (5) an das angeschlossene weitere Netzwerk (3) weitergeleitet werden, wobei die Daten als Datenpakete übertragen werden und ermittelt wird, ob ein Datenpaket übertragen wurde oder nicht und darauf basierend abgeleitet wird, ob das Übertragungssystem (1) fehlerfrei oder nicht arbeitet.

2. Verfahren nach Anspruch 1, wobei jedes fehlerfrei übertragene Datenpaket gezählt und in Bezug gesetzt wird zu der Gesamtzahl der übertragenen Datenpakete und daraus eine Ausfallwahrscheinlichkeit berechnet wird.

3. Verfahren nach Anspruch 2, wobei für jede Übertragungsstrecke (6, 7) jedes fehlerfrei übertragene Datenpaket gezählt und in Bezug gesetzt wird zu der Gesamtzahl der übertragenen Datenpaket und daraus eine Ausfallwahrscheinlichkeit berechnet wird.

4. Verfahren nach Anspruch 2 oder 3, wobei die Ausfallwahrscheinlichkeit angezeigt wird.

5. Verfahren nach Anspruch 2, 3 oder 4, wobei dann, wenn die Ausfallwahrscheinlichkeit eine vorgebbare Schwelle überschreitet, eine Benachrichtigung ausgelöst wird.

## Claims

1. Method for operating a transmission system (1) that comprises a first network (2) and at least one further network (3), wherein data are interchanged between these at least two networks (2, 3) by virtue of data of the first network (2) being supplied to duplicating means (4), wherein the supplied data are split into two data streams by the duplicating means and are wirelessly transmitted to separating means (5) via at least two transmission links (6, 7) by means of the parallel redundancy protocol, PRP, and forwarded to the connected further network (3) by the separating means (5), wherein the data are transmitted as data packets and it is ascertained whether or not a data packet was transmitted, and this is taken as a basis for deducing whether or not the transmission system (1) is operating correctly.

2. Method according to Claim 1, wherein each correctly transmitted data packet is counted and related to the total number of transmitted data packets, and this is used to calculate a probability of failure.

3. Method according to Claim 2, wherein each correctly transmitted data packet is counted and related to the total number of transmitted data packets, and this is used to calculate a probability of failure, for each transmission link (6, 7).

4. Method according to Claim 2 or 3, wherein the probability of failure is displayed.

5. Method according to Claim 2, 3 or 4, wherein if the probability of failure exceeds a predefinable threshold then a notification is triggered.

## Revendications

1. Procédé de fonctionnement d'un système de transmission (1) qui comporte un premier réseau (2) et au moins un autre réseau (3), des données étant échangées entre ces au moins deux réseaux (2, 3) en ce que des données du premier réseau (2) sont fournies à des moyens de duplication (4), les données fournies étant divisées en deux flux de données par les moyens de duplication et transmises sans fil à des moyens de séparation (5) par le biais d'au moins deux voies de transmission (6, 7) à l'aide d'un protocole de redondance parallèle, PRP, et étant redirigées des moyens de séparation (5) à l'autre réseau raccordé (3), les données étant transmises sous forme de paquets de données et une détermination étant effectuée quant à la transmission ou non d'un paquet de données et une déduction étant faite à partir de là quant au fonctionnement correct ou non du système de transmission (1).

2. Procédé selon la revendication 1, chaque paquet de données transmis sans erreur étant compté et mis en relation avec le nombre total de paquets de données transmis et une probabilité de défaillance étant alors calculée.

3. Procédé selon la revendication 2, pour chaque voie de transmission (6, 7), chaque paquet de données transmis sans erreur étant compté et mis en relation avec le nombre total de paquets de données transmis et une probabilité de défaillance étant alors calculée.

4. Procédé selon la revendication 2 ou 3, la probabilité de défaillance étant affichée.

5. Procédé selon la revendication 2, 3 ou 4, une notification étant délivrée lorsque la probabilité de défaillance dépasse un seuil spécifiable.
